Europäisches Patentamt

**(19)** European Patent Office

Office européen des brevets

**(11)** Publication number : **0 384 900 B1**

**(12)** # EUROPEAN PATENT SPECIFICATION

**(45)** Date of publication of patent specification :
**25.05.94 Bulletin 94/21**

**(51)** Int. Cl.$^5$ : **H02H 5/04**

**(21)** Application number : **90830048.6**

**(22)** Date of filing : **08.02.90**

**(54) Overheating protection triggering circuit having a narrow range of variation of the threshold.**

**(30)** Priority : **22.02.89 IT 8360689**

**(43)** Date of publication of application :
**29.08.90 Bulletin 90/35**

**(45)** Publication of the grant of the patent :
**25.05.94 Bulletin 94/21**

**(84)** Designated Contracting States :
**DE FR GB NL**

**(56)** References cited :
**DE-A- 3 321 912**
**US-A- 3 809 929**
**US-A- 4 021 722**

**(73)** Proprietor : **SGS-THOMSON**
**MICROELECTRONICS s.r.l.**
**Via C. Olivetti, 2**
**I-20041 Agrate Brianza Milano (IT)**

**(72)** Inventor : **Murari, Bruno**
**Via Ardigo, 1**
**I-20052 Monza (IT)**
Inventor : **Solari, Roberto**
**Via Ariosto, 5**
**I-20090 Trezzano sul Naviglio (IT)**
Inventor : **Nisetto, Massimo**
**Via Pasubio, 5**
**I-35100 Padova (IT)**

**(74)** Representative : **Pellegri, Alberto et al**
**c/o Società Italiana Brevetti S.p.A.**
**Via Puccini, 7**
**I-21100 Varese (IT)**

EP 0 384 900 B1

## Description

## BACKGROUND OF THE INVENTION

### 1. Field of the Invention

The present invention relates to integrated circuits and more in particular to a protection circuit for switching off completely the integrated circuit when the silicon chip temperature becomes greater than a certain designed threshold.

### 2. Description of the prior art

A recurrent problem is that of maintaining a designed temperature threshold within a narrow range of variation or within easily definable limits. In fact, because of the spread of components' parameters, typical of the particular fabrication process followed, instances may occur wherein an excessive shifting of the threshold temperature from the design value causes an erratic intervention of the overheating protection and consequently an irregular performance of the integrated circuit. E.g., the triggering of the protection system at a too low temperature unduly limits the range of operating temperatures of the integrated circuit, while an intervention at an excessively high temperature jeopardizes safety and exposes the integrated circuit to irreversible damages.

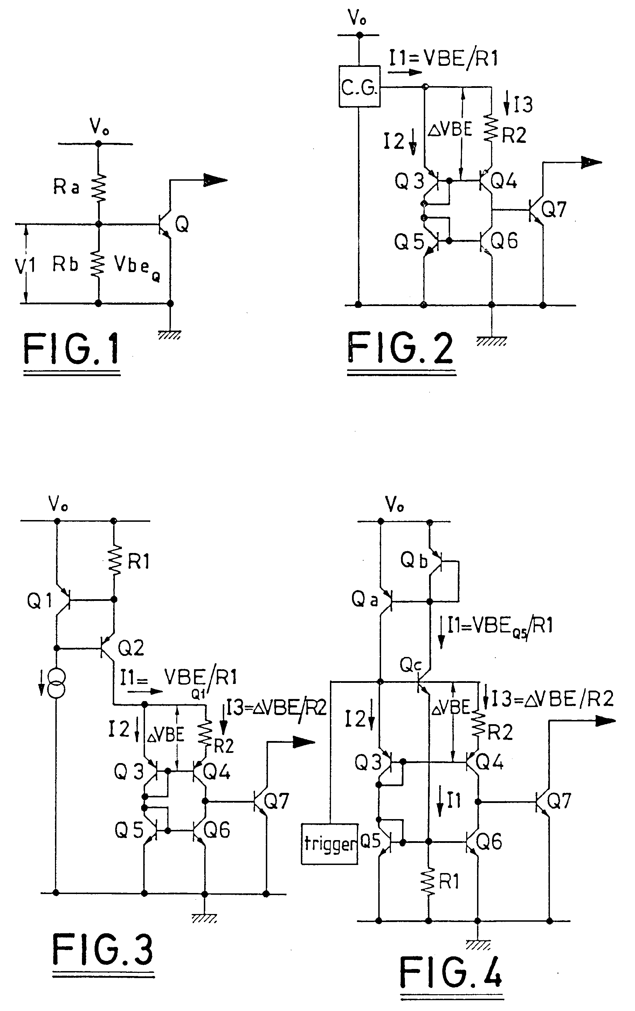

Presently used overheating protection circuits in integrated circuits basically consist of a triggering circuit which compares a reference voltage with a base-emitter voltage (VBE) or with multiples thereof. A typical example of these known protection circuits is depicted in Fig. 1. The protection circuit compares a set voltage on the divider Ra-Rb with the threshold VBE of the transistor Q. When temperature increases, the VBE decreases by about -2 mV/°C (in silicon) and this eventually leads to the switching on of the transistor Q, which within the design range of allowed operation temperatures is maintained in a cut-off condition.

In this circuit any variation from the design value of the VBE, the voltage divider ratio and/or the reference voltage Vo, have a direct influence upon the resulting switching-on threshold temperature of the guard transistor.

## OBJECTIVE AND SUMMARY OF THE INVENTION

The objective of the present invention is to provide an improved overheating protection triggering circuit which permits to limit the range of variation of the designed intervention threshold notwithstanding the spread of parameters due to the particular fabrication process followed.

According to the invention, this objective is achieved with evident advantages in respect to the prior art by employing a circuit as specified in claim 1 which substantially performs a comparison between two currents: one substantially proportional to a strongly temperature dependent ratio VBE/R1 and another current proportional to a relatively little temperature dependent ratio δVBE/R2, wherein R1 and R2 are two resistances the values of which are preset in function of other parameters in order to establish a desired intervention threshold temperature, VBE is the base-emitter voltage of a transistor of the circuit and δVBE is the difference between the respective base-emitter voltages of transistors forming an emitter-degenerated current mirror. When the currents flowing through the two branches of the current mirror become equal to each other, consequent to the reaching of a temperature equal to the designed intervention threshold temperature, a transistor is made conductive in order to perform the switching-off of the entire overheated integrated circuit in accordance with a normal mode of intervention of an overheating protection circuit.

As it will be amply described later in the specification, the circuit of the invention is practically insensitive to the spread of certain parameters of integrated transistors, of the value of resistances and of the reference voltage employed, from their respective design values.

## BRIEF DESCRIPTION OF THE DRAWINGS

The various aspects and advanteges of the present invention will become evident through the following detailed description of some preferred embodiments, shown for purely illustrative and nonlimitative purposes in the appended drawings, wherein:

FIG. 1 shows an overheating protection circuit of the prior art;
FIG. 2 shows an overheating protection circuit of the present invention;
FIG. 3 shows a specific embodiment of the circuit of the invention; and
FIG. 4 shows a different embodiment of the circuit of the invention.

## DESCRIPTION OF PREFERRED EMBODIMENTS OF THE INVENTION

With reference to Fig. 2, the overheating protection triggering circuit of the invention, i.e. the circuit for defining a desired intervention temperature threshold, which switches-on a guard transistor Q7 upon reaching the desired intervention temperature threshold, employs a circuit C.G. which generates a current I1 proportional to a designed ratio VBE/R1 and a current mirror circuit formed essentially by two complementary current mirrors: a first mirror being formed by the pair of (PNP) transistors Q3 and Q4 and a second mirror formed by the pair of (NPN) transistors Q5 and Q6. The transistor Q3 of the "input" branch of the first current mirror and/or the transistor Q6 of the "output" branch of the second current mirror, have dimensions smaller than the dimensions of the respective other transistor of the first mirror or of both mirrors and moreover the first current mirror is emitter-degenerated by means of a resistance R2 having a preset value. Preferably, the second current mirror is formed by a pair of NPN transistors, Q5 and Q6, having identical areas (notably a condition of identical VBE(s) is easily obtainable for NPN pairs) and therefore it will function as a "proper" current mirror (i.e. the currents through the two branches of the circuit will be equal) when the complementary first current mirror, formed by the PNP transistors Q3 and Q4 purposely made of different sizes (i.e. the transistor Q4 having a larger size than the transistor Q3) delivers the same current in the two branches of the circuit. Therefore, by ensuring that at a certain temperature (designed intervention temperature threshold) the current flowing through the transistor Q3 becomes equal to the current flowing through the transistor Q4, the transistor Q7 will be switched-on at such a temperature with a consequent triggering of the overheating protection. This is obtained by choosing the value of the resistance R2 in function of the dimensional ratio between the two transistors of different sizes of the first mirror, Q3 and Q4.

Basically the current $I1 = VBE/R1$, imposed on the entire circuit by the current generator C.G. and which divides itself into the two currents I2 and I3 flowing in the "input" and in the "output" branches of the current mirrors, respectively, is substantially compared (with the varying of the temperature) with the current $I3 = \delta VBE/R2$, where $\delta VBE$ is the base-emitter voltage difference between the two transistors Q3 and Q4 which form the first emitter-degenerated current mirror.

Basically these two currents vary in a substantially different manner with the changes of temperature. The first current I1 is remarkably sensitive to the temperature because when the latter increases, the current I1 decreases because of both the attendant decrease of the value of the VBE with the temperature by about -2 mV/°C, and the increase of the resistance R1 by about 2-3%/°C.

On the contrary the second current $I3 = \delta VBE/R2$ is on the contrary much less affected by temperature because the term $\delta VBE$ has a linear type relationship with temperature alike the resistance R2.

In this way, with an increase of temperature, the current I1 decreases in a much faster manner than the current I3 and consequently the two originally different currents I2 and I3 flowing through the two branches of the two complementary current mirrors becomes equal at a certain temperature and when the latter is reached the transistor Q7 will be switched-on thus triggering the protection.

A current essentially proportional to a certain VBE/R ratio may be generated in many ways, as it will be evident to the skilled technician, and therefore the current generating circuit C.G. may take any suitable form.

In Fig. 3 a circuit diagram of such a current generating circuit is shown in accordance with a first preferred embodiment. The circuit is formed by a first transistor Q1 having a resistance R1 connected between the base and the emitter, which is also connected to the positive supply rail Vo, and a bias current generator is connected between the collector and the other supply rail (ground). A second transistor Q2, has a base connected to the collector of Q1 and an emitter connected to the base of Q1 and permits to recover the base current of Q1 besides "freeing" the circuit from the supply voltage.

The transistor Q1 and the resistance R1 determine the generation of a current given by $I1 = VBE_{Q1}/R1$, which is forced on the transistor Q2 and on the entire circuit (i.e.: $I1 = I2 + I3$).

An analysis of the operation of the circuit may be conducted by examining the embodiment of the circuit of the invention of Fig. 2 wherein the pair of NPN transistors Q5 and Q6 of the second current mirror has a unitary area ratio, the PNP transistor Q4 has an area three times larger than the area of the PNP transistor Q3, R1 = 16.5 KΩ, I1 = 100 μA, $VBE_{Q1}$ of transistor Q1 (with a collector current of 100 μA) is equal to 690 mV, and the $\delta VBE$ is equal to 28 mV (for an area ratio between the transistors Q3 and Q4 equal to 1:3), the above values being referred to a temperature of 25°C.

If an intervention threshold of 150°C is desired and assuming a temperature coefficient of VBE equal to -2 mV/°C and a temperature coefficient of integrated resistors equal to 0.23‰/C, one has:

$$VBE_{Q1}(150°C) = 690 \times 10^{-3} - (150 - 25) 2 \times 10^{-3}$$
$$= 440 \text{ mV}$$

$$R1_{(150°C)} = 16.5 \times 10^3 + 0.0023 (150 - 25) 16.5 \times 10^3 = 21.125 \text{ KΩ}$$

$$I1_{(150°C)} = \frac{VBE_{Q1(150°C)}}{R1_{(150°C)}} = \frac{440 \times 10^{-3}}{21.125 \times 10^3} = 20 \text{ μA}$$

being: $I1 = I2 + I3$ and by imposing $I2 = I3$ one as:

$$I2 = I3 = 10 \text{ μA}$$

from which the value to be attributed to the resistance R2 may be obtained:

$$R2_{(150°C)} = \frac{\delta VBE_{(150°C)}}{I3}$$

where:

$$VBE_{(150°C)} = \frac{KT}{q} \ln \frac{A2}{A1}$$

wherein:

K = Boltzman constant
T = temperature in °K
q = charge of the electron
A2 = area of Q4
A1 = area of Q3

and therefore

$$R2_{(150°C)} = \frac{\delta VBE_{(150°C)}}{13} = \frac{39 \times 10^{-3}}{10 \times 10^{-6}} = 3.9 \times 10^3 \, \Omega$$

and

$$R2_{(25°C)} = 3.9 \times 10^3 - 0.0023 \, (150 - 25) \, 3.9 \times 10^3$$
$$= 2.8 \, K\Omega$$

With this value of the resistance R2 an equality of current in the second complementary mirror (Q5 and Q6) is achieved at the temperature of 150°C and consequently also the desired switching-on of the transistor Q7.

Of course, as it will be evident to the skilled technician, the necessary original "unbalance" between the two branches of the two complementary current mirrors may be obtained by instead of making larger the area of the transistor Q4 in respect to the area of transistor Q3, by making the area of the transistor Q5 (of the second current mirror) larger than the area of the transistor Q6, or by making larger the area of the transistor Q4 in respect to the area of the transistor Q3 and simultaneously making the area of the transistor Q5 larger than the area of the transistor Q6.

Clearly the ratios between areas of transistors forming the two complementary mirrors and the value of the resistance R2 are the two parameters which must be adjusted in the design stage of the integrated circuit in order to achieve a desired threshold temperature of intervention of the over-heating protection.

In Fig. 4 another embodiment of the circuit of the invention is shown wherein the generation of a current I1 proportional to a base-emitter voltage value divided by a certain resistance value is performed by the same transistor Q5 of the second mirror utilizing the same resistance R1 connected between the base and the emitter of the transistor. The reference current of the circuit: I1 = VBE$_{Q5}$/R1, is replicated by means of the current mirror formed by the transistors Qa and Qb and fed to the two complementary current mirrors (I1 = I2 + I3). The circuit must be initially started-off by means of a single pulse which may be provided by any ancillary triggering circuit. The transistor Qc essentially performs a decoupling function. Of course once started the circuit functions as the circuit of Fig. 3, with the only difference that the reference current I1 is a function of the base-emitter voltage of the transistor Q5 of the second current mirror.

## Claims

1. An overheating protection triggering circuit for switching-on a transistor (Q7) when a certain preset threshold temperature is reached which comprises:

a current generating circuit which generates a current (I1) essentially proportional to VBE/R1 where R1 is a first preset resistance and VBE is the base-emitter voltage of a transistor of the circuit;

a first current mirror formed by a first pair of transistors of a first polarity (Q3 and Q4), emitter degenerated by means of a second resistance (R2) of a preset value connected between the emitter of the transistor (Q4) of the output branch of the current mirror and the emitter of the transistor (Q3) of the input branch of the current mirror to which said current (I1) produced by said current generating circuit is delivered;

a second current mirror, complementary in respect to said first current mirror, formed by a second pair of transistors of a second polarity (Q5 and Q6) having respective emitters connected to a supply rail and respective collectors connected to the respective collectors of the transistors (Q3 and Q4) of said first pair of transistors forming said first current mirror;

the base of said transistor (Q7) to be switched-on upon the reaching of the preset threshold temperature being connected to the common node of said collectors of the transistors (Q4 and Q6) of the output branch of said two complementary current mirrors;

at least one of said transistors (Q4 and/or Q5) respectively of the output branch and of the input branch of the two complementary current mirrors having an area larger than the area of the other transistor (Q3 and/or Q6) of the same current mirror to which said one of said transistors belongs, and the current flowing through the output branch of said two complementary current mirrors being proportional to $\delta VBE/R2$, where $\delta VBE$ is the difference between the base-emitter voltages of the two transistors of said first emitter-degenerated current mirror and R2 is said second resistance connected between the emitters of said pair of transistors of said first emitter-degenerated, current mirror;

said current proportional to VBE/R1 delivered to the input branch of said two complementary mirrors being more temperature dependent than the current proportional to $\delta VBE/R2$ flowing through the output branch of said two current mirrors and the switching-on of said transistor (Q7) occuring when, upon reaching of the preset threshold temperature, the currents flowing through the two branches of said two complementary current mirrors become equal to each other.

2. The overheating protection triggering circuit according to claim 1, wherein said current generating circuit is formed by a first transistor (Q1) of said first polarity having a base, an emitter and a collector;

a resistance (R1) connected between the base and the emitter of said first transistor (Q1), which emitter of said first transistor (Q1) is connected to a first supply rail;

a biasing constant current generator connected between the collector of said first transistor (Q1) and a second supply rail; and

a second transistor (Q2) of said first polarity, having a base connected to the collector of said first transistor (Q1), a collector connected to the emitter of the transistor of the input branch of said first current mirror and an emitter connected to the base of said first transistor (Q1).

3. The overheating protection circuit according to claim 1, wherein said current generating circuit is formed by the transistor (Q5) of the input branch of said second current mirror, provided with a resistance (R1) connected between its base and emitter, its base being connected through a decoupling transistor (Qc) to an input terminal of a third current mirror formed by two transistors (Qb and Qa) of said first polarity having the emitters connected to a supply rail;

the collector of the transistor (Qa) of the output branch of said third current mirror being connected to the emitter of the transistor (Q3) of the input branch of said first current mirror;

a triggering circuit providing a starting pulse applied to said input node of said first current mirror.

**Patentansprüche**

1. Überhitzungsschutz-Auslöseschaltung zum Einschalten eines Transistors (Q7) beim Erreichen einer bestimmten voreingestellten Schwellenwert-Temperatur, aufweisend:

eine Stromgeneratorschaltung, die einen Strom (I1) erzeugt, der im wesentlichen proportional zu VBE/R1 ist, wobei R1 ein erster voreingestellter Widerstand und VBE die Basis-Emitter-Spannung eines Transistors der Schaltung ist;

einen durch ein erstes Paar von Transistoren einer ersten Polarität (Q3 und Q4) gebildeten ersten Stromspiegel, der mittels eines zwischen den Emitter des Transistors (Q4) des Ausgangszweiges des Stromspiegels und den Emitter des Transistors (Q3) des Eingangszweiges des Stromspiegels geschalteten zweiten Widerstandes (R2) eines voreingestellten Wertes Emittergegengekoppelt ist und an den der durch die Stromgeneratorschaltung erzeugte Strom geliefert wird;

einen bezüglich des ersten Stromspiegels komplementären, durch ein zweites Paar von Transistoren einer zweiten Polarität (Q5 und Q6) gebildeten zweiten Stromspiegel mit Emittern, die je mit einer Versorgungsschiene verbunden sind, und mit Kollektoren, die je mit den entsprechenden Kollektoren der Transistoren (Q3 und Q4) des ersten Paares der den ersten Stromspiegel bildenden Transistoren verbunden sind;

wobei die Basis des beim Erreichen der voreingestellten Schwellenwerttemperatur durchzuschaltenden Transistors (Q7) mit dem gemeinsamen Schaltungsknoten der Kollektoren der Transistoren (Q4 und Q6) des Ausgangszweiges der beiden komplementären Stromspiegel verbunden ist;

wobei mindestens einer der Transistoren (Q4 und/oder Q5) des Ausgangszweiges bzw. des Eingangszweiges der beiden komplementären Stromspiegel eine Fläche aufweist, die größer ist als die Fläche des anderen Transistors (Q3 und/oder Q6) desselben Stromspiegels, zu dem der eine der Transistoren gehört, und wobei der durch den Ausgangszweig der beiden komplementären Stromspiegel fließende Strom proportional zu δVBE/R2 ist, wobei δVBE die Differenz zwischen den Basis-Emitter-Spannungen der beiden Transistoren des Emitter-gegengekoppelten ersten Stromspiegels und R2 der zwischen die Emitter des Transistorpaares des Emitter-gegengekoppelten ersten Stromspiegels geschaltete zweite Widerstand ist;

wobei der zu VBE/R1 proportionale, dem Eingangszweig der beiden komplementären Spiegel gelieferte Strom stärker temperaturabhängig als der zu δVBE/R2 proportionale, durch den Ausgangszweig der beiden Stromspiegel fließende Strom ist und das Einschalten des Transistors (Q7) auftritt, wenn beim Erreichen der voreingestellten Schwellenwerttemperatur die durch die Zweige der beiden komplementären Stromspiegel fließenden Ströme gleich groß werden.

2. Überhitzungsschutz-Auslöseschaltung nach Patentanspruch 1, wobei die Stromgeneratorschaltung gebildet ist durch einen ersten Transistor (Q1) der ersten Polarität mit einer Basis, mit einem Emitter und mit einem Kollektor;

einen zwischen die Basis und den Emitter des ersten Transistors (Q1) geschalteten Widerstand (R1), wobei der Emitter des ersten Transistors (Q1) mit einer ersten Versorgungsschiene verbunden ist;

einen zwischen den Kollektor des ersten Transistors (Q1) und eine zweite Versorgungsschiene geschalteten, vorspannenden Konstantstromgenerator; und

einen zweiten Transistor (Q2) der ersten Polarität, mit einer mit dem Kollektor des ersten Transistors (Q1) verbundenen Basis, einem mit dem Emitter des Transistors des Eingangszweiges des ersten Stromspiegels verbundenen Kollektor und einem mit der Basis des ersten Transistors (Q1) verbundenen Emitter.

3. Überhitzungsschutz-Auslöseschaltung nach Anspruch 1, wobei die Stromgeneratorschaltung durch den Transistor (Q5) des Eingangszweiges des zweiten Spiegels, versehen mit einem zwischen die Basis und den Emitter geschalteten Widerstand (R1), gebildet ist, wobei dessen Basis über einen Entkopplungstransistor (Qc) mit einem Eingangsanschluß eines durch zwei Transistoren (Qb und Qa) der ersten Polarität gebildeten Stromspiegels verbunden ist, wobei die Emitter mit einer Versorgungsschiene verbunden sind;

wobei der Kollektor des Transistors (Qa) des Aüsgangszweiges des dritten Stromspiegels mit dem Emitter des Transistors (Q3) des Eingangszweiges des ersten Stromspiegels verbunden ist;

wobei eine Auslöseschaltung einen dem Eingangsknoten des ersten Stromspiegels aufgeprägten Startimpuls liefert.

**Revendications**

1. Circuit de déclenchement d'une protection contre une surchauffe pour commuter à la fermeture un transistor (Q7) quand une température de seuil prédéterminée est atteinte, qui comprend :

un circuit de génération de courant qui produit un courant (I1) essentiellement proportionnel à VBE/R1 où R1 est une première résistanoe prédéterminée et VBE est la tension base-émetteur d'un transistor du circuit ;

un premier miroir de courant constitué d'une première paire de transistors d'une première polarité (Q3 et Q4), à émetteur dégénéré par une seconde résistance (R2) de valeur prédéterminée connectée entre l'émetteur du transistor (Q4) de la branche de sortie du miroir de courant et l'émetteur du transistor (Q3) de la branche d'entrée du miroir de courant auquel le courant (I1) produit par le circuit de génération de courant est fourni ;

un deuxième miroir de courant, complémentaire du premier miroir de courant, constitué d'une deuxième paire de transistors d'une seconde polarité (Q5 et Q6) ayant des émetteurs respectifs connectés à un rail d'alimentation et des collecteurs respectifs connectés aux collecteurs respectifs des transistors (Q3 et Q4) de la première paire de transistors formant le premier miroir de courant ;

la base du transistor (Q7) à commuter à la fermeture quand on atteint la température de seuil prédéterminée étant connectée au noeud commun des collecteurs des transistors (Q4 et Q6) de la branche de sortie des deux miroirs de courant complémentaires ;

au moins un des transistors (Q4 et/ou Q5), respectivement, de la branche de sortie et de la branche d'entrée des deux miroirs de courant complémentaires ayant une surface plus grande que la surface de l'autre transistor (Q3 et/ou Q6) du même miroir de courant auquel le premier des transistors appartient, et le courant circulant dans la branche de sortie des deux miroirs de courant complémentaire étant proportionnel à δVBE/R2 où δVBE est la différence entre les tensions base-émetteur des deux transistors du premier miroir de courant à émetteur dégénéré et R2 est la deuxième résistance connectée entre les émetteurs de la paire de transistors du premier miroir de courant à émetteur dégénéré ;

ledit courant proportionnel à VBE/R1 fourni à la branche d'entrée des deux miroirs de courant complémentaires étant plus dépendant en température que le courant proportionnel à δVBE/R2 circulant dans la branche de sortie des deux miroirs de courant et la commutation à la fermeture du transistor (Q7) survenant quand, après avoir atteint la température de seuil prédéterminée, les courants circulant dans les deux branches des deux miroirs de courant complémentaires deviennent égaux.

2. Circuit de déclenchement de protection contre une surchauffe selon la revendication 1, dans lequel le circuit de génération de courant comprend

un premier transistor (Q1) de la première polarité ayant une base, un émetteur et un collecteur ;

une résistance (R1) connectée entre la base et l'émetteur du premier transistor (Q1), cet émetteur du premier transistor (Q1) étant connecté à un premier rail d'alimentation ;

un générateur de courant constant de polarisation connecté entre le collecteur du premier transistor (Q1) et un second rail d'alimentation ; et

un deuxième transistor (Q2) de la première polarité ayant une base connectée au collecteur du premier transistor (Q1), un collecteur connecté à l'émetteur du transistor de la branche d'entrée du premier miroir de courant et un émetteur connecté à la base du premier transistor (Q1).

3. Circuit de protection contre une surchauffe selon la revendication 1, dans lequel le circuit de génération de courant est constitué par le transistor (Q5) de la branche d'entrée du deuxième miroir de courant, muni d'une résistance (R1) connectée entre sa base et son émetteur, sa base étant connectée par un transistor de découplage (Qc) à une borne d'entrée d'un troisième miroir de courant constitué de deux transistors (Qb et Qa) de la première polarité ayant leurs émetteurs connectés à un rail d'alimentation ;

le collecteur du transistor (Qa) de la branche de sortie du troisième miroir de courant étant connecté à l'émetteur du transistor (Q3) de la branche d'entrée du premier miroir de courant ;

un circuit de déclenchement fournissant une impulsion de démarrage appliquée au noeud d'entrée du premier miroir de courant.

FIG.1

FIG.2

FIG.3

FIG.4